(19) **Europäisches Patentamt**
**European Patent Office**
**Office européen des brevets**

(11) **EP 1 975 058 B1**

(12) **EUROPEAN PATENT SPECIFICATION**

(45) Date of publication and mention
of the grant of the patent:
**09.03.2016 Bulletin 2016/10**

(51) Int Cl.:
*B63C 7/00* *(2006.01)*      *E02D 15/10* *(2006.01)*
*E02B 15/04* *(2006.01)*      *B09B 1/00* *(2006.01)*
*B63B 35/00* *(2006.01)*

(21) Application number: **06841703.9**

(22) Date of filing: **23.11.2006**

(86) International application number:
**PCT/ES2006/000650**

(87) International publication number:
**WO 2007/060275 (31.05.2007 Gazette 2007/22)**

(54) **METHOD FOR THE CONTAINMENT OF POLLUTANTS PRESENT IN THE AQUATIC ENVIRONMENT**

VERFAHREN ZUM EINSCHLIESSEN VON IN EINER WÄSSRIGEN UMGEBUNG VORHANDENEN VERUNREINIGUNGEN

PROCEDE DE CONFINEMENT D'AGENTS CONTAMINANTS PRESENTS DANS LE MILIEU AQUATIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.11.2005 ES 200502909**

(43) Date of publication of application:
**01.10.2008 Bulletin 2008/40**

(73) Proprietor: **Haupt, Bernd J.**
**State College, PA 16801 (US)**

(72) Inventors:
• **HAUPT, Bernd, J.**
**State College, PA 16801 (US)**
• **VILLAR, Maria Victoria**
**28040 Madrid (ES)**
• **MARCOS, Maria Jesus**
**28040 Madrid (ES)**
• **ROMERO, Luciano**
**28040 Madrid (ES)**
• **DE PABLOS, Jose Luis**
**28040 Madrid (ES)**
• **AGÜERO, Almudena**
**28040 Madrid (ES)**
• **GARCIA-OLIVARES, Antonio**
**28006 Madrid (ES)**

(74) Representative: **Garcia-Cabrerizo y del Santo, Pedro Maria**
**Oficina Garcia Cabrerizo, S.L.,**
**Vitruvio, 23**
**28006 Madrid (ES)**

(56) References cited:
**BE-A5- 1 015 677      BE-A5- 1 015 677**
**GB-A- 2 396 335      US-A- 4 129 008**
**US-A- 4 129 008      US-A- 4 266 889**
**US-A- 4 266 889**

**Description**

This invention falls within the technical field of products, systems and methods for the isolation or containment of waste and pollutants of any type present in aquatic environment and more specifically to the deposition of a containment material, containing sepiolite, to form a barrier for the containment and isolation of sunken ships with contaminating material in their holds or tanks or of drums of waste present in the sea, irrespective of the depth. Also, it is useful for the containment of pollutants dispersed in sediments or sludge, be they radionuclides, heavy metals, petroleum derivatives or organic contaminants existing in natural or artificial aquatic media of fresh, brackish or salty water.

## BACKGROUND OF THE INVENTION

The isolation and containment of waste is an important requirement for modern industrial society. The use of clays for the containment of radioactive waste is a related area of investigation that is amply developed in the field of Deep Geological Storage (ENRESA, 1995). In this case, the use of bentonite has been the object of repeated study by various investigator groups. However, the high price of this clay makes it of limited use in applications where large quantities of material are required. In addition, depending on the mineralogical composition, some varieties are not stable in salt water.

Sepiolite is a natural mineral (hydrated magnesium silicate) with a chemical formula corresponding to $Mg_8Si_{12}O_{30}(OH)_4(OH_2)_4$ $8H_2O$. One of its properties is a high absorption/adsorption capacity, due to its high specific surface area (higher than the specific surface area of other clays) but with stability of volume, which enables its use in applications in contact with water where its structure and properties remain stable. It is used on an industrial scale in terrestrial media, in the absorption of pollutants, either liquid, solid or gaseous, as disclosed in the documents EP 0717928, ES 8603358, ES 2005754 and WO 95/19326. It effectively absorbs pollutants, such as heavy metals (Li et al., 2003; Kara et al. 2003; Andrade et al., 2005), pollutants present in petroleum derivatives (Lázaro et al., 2000) and radionuclides (Dultz et al., 2005).

This clay is commercialised in aggregates of almost any grain size, which allows the selection of the most appropriate type of grain for the desired application.

In the treatment of pollutants dispersed in aquatic environment of low depth (seas, lakes or reservoirs), contaminated sediments can produce toxic effects in aquatic life, such as cancer in fish exposed to polycyclic aromatic hydrocarbons (PAH) or in their predators, among them man. Currently, in these types of shallow aquatic media, the methodology of "capping" is used. This consists in covering the contaminated sediments with a fine layer of sand, in the order of 20cm, and also in the use of geotextiles or biodegradable films, such as those disclosed in the document JP2004092244. This method has been and is applied by countries such as the United States and Japan, and has established protocols and procedures (Palermo et al., 1988). The method of capping with sand has the advantage of low cost but also the serious disadvantage of zero absorption of pollutants if they should leach. This makes the capping a technique that requires maintenance and regular observation of the state of the covering (Palermo et al., 1988).

Document US 5115751 discloses a method and the necessary device for the disposal of waste in aquatic media. Document US 6290637 discloses a procedure based on a mineral that contains phosphate for the isolation of pollutants. Document US 5502268 discloses the use of a porous material as a continuous cover; but it indicates the need to use a pore sealing reagent, while documents US 4 129 008 as well as US 4 266 889 are disclosing the feeding of concrete underwater.

The use of sepiolite clay as a containment material is not described in any of the cited documents.

Regarding sunken ships on sea beds with dangerous contaminating cargos, there are two databases, AMIO (Atlantic) and WWII SPREP (Pacific War) that provide a geographic inventory of wrecks. The Second World War alone produced 7,807 shipwrecks, of which 861 were cargo ships or oil tankers. There are 3,000 wrecks in the North Atlantic, due to the Battle of the Atlantic and 305 wrecks in the Mediterranean (19 of them oil tankers) due to the war.

These wrecks pose a potential danger for a variety of reasons (Monfils, 2005); they have spent 60 years exposed to deteriorating conditions under the sea, their hulls were initially damaged by explosions, their hulls have been deformed due to the high pressures, they are subject to different forces over their hulls due to the accumulation of sediments over them, they have suffered from oxidation and electrochemical reactions in their hulls, iron oxide takes up a greater volume than iron causing expansion of the metal and adding forces that may burst valves and other elements containing the stored oil, many of these wrecks do not contain oil but munitions, mines, explosives, depth charges and chemical agents (such as phosphorus and mustard gas), often sunk after the war as a final management solution. Many of these elements appear in fishing nets from time to time.

Many oil tanker wrecks with their polluting cargos are found at the bottom of the oceans, among them the Prestige, and many other ships will sink in the next few years with potentially polluting cargos. Given that experience shows that complete extraction of the cargo is not possible when dealing with petroleum derivatives (Marcos et al. 2004), no optimum solution is available to date. The extraction of the petroleum, in addition to the high cost, leaves between 10% to 40% of the initial polluting cargo in the ship (Cedre, 2002). Covering with concrete, using specialised cements, only solves the problem for some 50 years until the concrete cracks. This was the case with the oil tanker Pallas, sunk in German waters, that, after the extraction of all the petroleum possible, was sealed under a concrete with special resistance to the corrosion caused by salt water. The difficulties have led many governments in recent times to do nothing with the wreck, as occurred in the case of the Nadhodka (Japan), and simply wait for the polluting cargo to be discharged little by little. The problem with types of decisions is that the risk of the pollution reaching the shores continues for many years and this puts off the problem for future generations (with the highest risk occurring 25 to 50 years after the sinking).

Other solutions applied to sunken petrol tanker wrecks, such as bio-remediation, are methods that can serve in the regeneration of beaches but are useless in their application to oils forming thick layers, as the bio-degradation activity of the bacteria depends on the quantity of oxygen dissolved and the temperature This means that only the superficial layer of the petroleum is degraded. The low temperature found on the sea bottom causes the activity of the bacteria to be low. In addition, once they have completed their work, the bacteria themselves constitute a new waste, still not very much investigated and to which no definitive solution is available.

Other ships, nuclear submarines, have sunk as a consequence of accidents or serious damage in their structure. Currently there are six nuclear submarines that lie on the bottom of the ocean. Two of these are American (USS Thresher and USS Scorpion) sunk by accident. Four are Russian (K-8, K-219, K-278 Komsomolets and K-27), three sunk by accident and the Komsomolets sunk as a decided management operation by the Soviet government in the Kara Sea (Sivintsev and Chernyaev, 1998). The reactor of a nuclear submarine represents approximately 7% of the total volume and 95% of the radioactive pollution of the submarine is in the form of liquid and solid waste. When extracted, in dismantling operations on land, each ton of the spent fuel of the reactor contains between 950kg and 980kg of $^{238}$U, between 5.5kg and 9.6kg plutonium and small quantities of alpha emitting isotopes (neptunium, americium, curium and other transuranic elements). In the case of the Komsomolets, the submarine sunk with a total activity of 19.54PBq (Sivintsev and Chernyaev, 1998). The re-floating of these submarines is currently impossible, so the radioactivity they contain remains at the bottom of the sea and will be released when the hull is corroded.

Other pollutants present on the sea bottom are those derived from "dumping" of radioactive waste. The disposal of drums with radioactive contents (dumping) in marine ditches was performed from the 1950s to 1975 when the London Protocol came into force. Due to dumping prior to the time the protocol came into force, there are currently 15 locations in the north-east Atlantic that contain a total activity of 42.32PBq (IAEA, 1999). The containers designed for disposal on the sea bottom were not designed for long-term storage of waste. For example, the waste packed by the British agencies were disposed in metal drums (75,000 tons of waste were dumped in the Atlantic Ocean using this method). The strategy followed at that time was essentially dispersive, not directed at containment; the containers were designed and produced to resist the impact and pressure at depths that would reach at least 4,000m. The London Protocol recognised that the dumping of waste is responsible for provoking danger to health, harm to marine organisms and interfering with other legitimate uses of the sea, so this management practice was prohibited.

In view of these events, some 30 to 60 years later, corrosion suffered by the drums must be significant and they are probably releasing radionuclides into the ocean. This is confirmed by scientific studies made by other authors. (Povinec et al., 2000) detected abnormally high levels of radioactivity of $^{14}$C and $^{129}$I in Atlantic waters and (Oughton et al., 2004) reported $^{239+240}$Pu in sediments in the Kara Sea; in both cases in locations close to the sites of waste disposal.

In summary, there are pollutant management systems for shallow waters that require much maintenance and are poorly effective at the retention of heavy metals. There is no definitive solution for managing pollutants present in deep waters. Therefore, it is necessary to have an economically viable and definitive system of containment so that the problems caused by pollution are not transmitted to future generations. Both types of problems are solved with this invention.

## DESCRIPTION OF THE INVENTION

The system of containment of the invention is characterised in that it contains at least one layer of clay with a mineral content of sepiolite of between 25% and 100%, and preferably higher than 40%. This sepiolite clay represents from 1% to 100% of the total volume of containment material. It can be the natural sepiolite clay or sepiolite clay modified by various treatments, such as thermal treatment, acid digestion, etc.

This system is constructed by depositing one or several, preferably continuous, layers of sepiolite and may be complemented with other layers of sand, gravel, other clays or other granular materials or using only sepiolite to form the containment material. One or more methods of deposition are described, depending on the characteristics of the objective to be covered (pollution source) and of the environment in which this objective is located.

Isolation, as a final solution to the management of pollution sources (wrecks and sunken nuclear submarines, drums of wastes or dispersed pollutants) present in aquatic media at various depths is a question that is still unresolved. In the specific case of pollutants dispersed in sediments in shallow waters, there is a partial solution consisting in covering with sands. Although sand presents a physical barrier to dissemination of the pollutants, it cannot act as a total barrier due to its high permeability (pollutants migrate through it), thereby it requires constant monitoring. Sunken ships and waste drums are not adequately managed to obtain a definitive non-polluting solution for technical reasons, such as: depth and their condition which prevents re-flotation, the inefficiency of the extraction of petroleum and of bio-remediation in the case of sunken oil tankers and the cracking of concretes (laid over sunken ships) that occur after their exposure to sea water.

The reasons described above make a new plan for the management of such pollution sources necessary. The containment system defined in this invention resolves these problems as it can be used to isolate pollution sources in both shallow and deep waters. It improves on the current technique for shallow waters because the barrier formed by the containment material deposited over a sunken ship does not crack with the passage of time and additionally prevents the progression of the corrosion of the hull, effectively isolating it from the surrounding medium. In the case of pollutants dispersed in sediments, the containment system, of low permeability, retains the pollutants within its structure. In the case of deep waters, it is able to achieve the objective at the depth in which is located and is much more economical than partial extraction of the polluting cargo or the re-floating of the ship or drum.

The containment system disclosed in this patent is based on the deposition of at least one layer, preferably continuous, of sepiolite of a grain size appropriate to the application. This containment system can be complemented with the deposition of other granular materials (other clays, sands, gravel, mixtures of granular material, etc.) with the aim of reducing the financial costs. The materials used (sepiolite and/or mixtures of sepiolite with other materials) are termed "containment material". The advantage of this containment system consists in physically isolating the pollution source or objective from the surrounding water and additionally preventing the processes of oxidation/corrosion as the deposited sepiolite undergoes a process of consolidation that expels gases and water in contact with the pollution source. In laboratory trials, consolidation coefficients for sepiolite of $2.9 \times 10^{-9}$m/s have been obtained.

From the experiments performed and from the data obtained in the bibliography, the characteristics of action of sepiolite (as a containment material) as a barrier to the migration of pollutants in the short, medium and long term have been obtained. These are:

- Chemical stability in fresh and salt waters. Easy to grind industrially in very varied sizes and forms.
- Absence of disintegration in the process of deposition.
- Formation of stable slopes of deposit in fresh and salt water with angular values between 18° and 40°, depending on the size of grain used (0.5mm to 6mm diameter).
- Resistance to erosion of the sepiolite covering that forms part of the containment system in the aquatic environment, determined by the grain size used.
- Consolidation with the passage of time. This reduces the natural permeability to very low values, an effect that impedes the diffusion of pollutants to the aquatic environment; while it is in the process of consolidation, there is a net outflow of gases and water from the hull or drum, impeding the progression of corrosion in the covered objective.
- Efficient absorption of pollutants such as heavy metals, petroleum derivatives and radionuclides, due to its high specific surface area.

The method of deposition of containment material over the objective to be covered (pollution source) differs depending on the depth at which this objective is to be found and the need or desire to use other granular materials as part of the containment material in the construction of the containment system. The objective to be covered can be a wreck or sunken submarine, drums of waste, dispersed pollutants present in sediments or any other form of pollution present in the aquatic environment.

A possible procedure to be followed in order to construct a containment system is the following:

i) Measurement *in situ* or documentation of the surface and deep currents and consideration of sporadic events, such as storms, that may occur in the area of the location of the objective to be covered.
ii) Selection of the minimum grain size of the containment material, which will be dependent on the velocity of the superficial and deep currents in the area of the location of the objective to be covered. In each case, it will be necessary to study if the objective to be covered is in a zone of internal waves and to measure the order of the magnitude of the forces on the sea bed before calculating the appropriate grain size. A reference value for the force on a typical sea bed with a current of some few $cm.s^{-1}$ is $0.001 N.m^{-2}$ These values are obtained for a sepiolite clay of a density of 2.6 times that of water. The force caused by water currents on the sea bed increases if there are internal waves up to an order of $2 N.m^{-2}$. Therefore, it will be necessary in each case to study if the location is in a zone of internal waves and the estimate the order of magnitude of the force on the sea bed, before calculating the appropriate grain size. In the example cited, the gain size will be at least some 5mm or 6mm.

More specifically, the force $\tau$ $(N.m^{-2})$ that a current produces on the sea bed is a function of the velocity of the current, of the quantity of turbulent kinetic energy that it initially transports and the size of the distribution of the roughness (or grains) of the bed. It is advisable to measure the force empirically but, for reference, in a current without much turbulence, as is common on the sea bed, the friction velocity v* is of the order of $3/100\mu$ or less, where $\mu$ is the velocity of the current on beds that are only slightly rough or from $10/100$ $\mu$ to $15/100\mu$ on rough beds. In the case where the roughness is determined by the layer of sepiolite, the value of v* will be presumably closer to the first value than the last values. In order to calculate the force $\tau$, the formula to be used is $\tau = \rho \, (v^*)^2$, where $\rho$ is the density of marine water and v* is the measured friction velocity. A typical value of v* for the sea bed is $2cm.s^{-1}$.

The value of the force measured must be then compared with the critical force, or force above which the sepiolite particles can be raised from their position of equilibrium over the bed. A standard tool for the calculation of the critical force knowing the diameter and density of the particles are the diagrams of Shields and Rouse (Kennedy, 1995; Guo, 1997). Table 1 shows the critical force obtained from the Shields and Rouse diagram for sepiolite particles of various grain sizes. The critical force of the particles of the selected size must be greater than the force measured, in actual conditions, on the bed to be treated.

The grain size also determines the slope that will be formed by the containment material on the border of the objective to be covered. Table 2 makes reference to the selection of grain size for deposition at great depths.

Table 1. Selection of grain size of containment material depending on the resistance to erosion that it must provide. Diameter of grain (mm) to select depending on the force $\tau$ (N.m$^{-2}$) found on the bed.

| Grain Diameter (mm) | 0.5 | 1 | 2 | 5 | 6 | 7 | 10 | 12 | 14 | 16 | 18 | 20 | 24 | 28 |
|---|---|---|---|---|---|---|---|---|---|---|---|---|---|---|
| Critical Force (N/m$^2$) | 0.27 | 0.64 | 1.50 | 4.29 | 5.25 | 6.23 | 9.22 | 11.24 | 13.28 | 15.33 | 17.40 | 19.50 | 23.70 | 27.90 |

EP 1 975 058 B1

In order to make a deposition at great depths, it is necessary to determine the velocity of the deposition for the minimum grain size chosen. This can be calculated from the following equation: it enables calculation for any grain size:

$$w^2 \frac{\rho_w A}{2} \left( \frac{24}{Re} + \frac{6}{1 + \sqrt{Re}} + 0.4 \right) = \frac{4}{3} \pi \left( \frac{D}{2} \right)^3 (\rho_s - \rho_w) g f \qquad (1)$$

where $w$ (m.s$^{-1}$) is the velocity of deposition, $D$ (m) is the particle diameter, ps and pw (kg.m$^3$) are the particle and water densities respectively, A (m) is the particle area at its maximum diameter, g is the acceleration due to gravity (9.81m.s$^{-2}$), Re is Reynolds number: Re = w.D.$\rho$w/$\mu$, where $\mu$ = 0.001kg.m$^{-1}$.s$^{-1}$ and f is the correction factor to take the not perfectly spherical shape of the particle into account.

Table 2. Selection of grain size of sepiolite for its deposition over objectives at great depths. Velocities of sedimentation obtained for sepiolite, in aquatic medium, depending on the grain size of the granular material derived from equation (1).

| Grain diameter (mm) | 0.5 | 1 | 1.5 | 2.5 | 3 | 3.5 | 4 | 4.5 | 5 | 5.5 | 6 | 6.5 | 7 |
|---|---|---|---|---|---|---|---|---|---|---|---|---|---|
| Sedimentation velocity (m.s$^{-1}$) | 0.09 | 0.17 | 0.23 | 0.29 | 0.37 | 0.41 | 0.45 | 0.48 | 0.51 | 0.55 | 0.57 | 0.60 | 0.63 |

iii) Determination of the minimum quantity of containment material (sepiolite clay) required for the construction of the first layer of the containment system depending on the volume of the pollutant, on the geometry of the objective to be covered, on the presence or absence of bioturbatory organisms, as well as on the thickness and weight required to guarantee consolidation and counteract possible flotation forces and of the necessary quantities of other granular materials in case they are required as part of the containment material.

iv) Deposition of the containment material. One or several ships with global positioning system GPS installed, loaded with sepiolite cargo are positioned on the surface. The position of the objective to be covered can be ascertained with a high resolution sonar or other procedures with the required precision.

In the case of the objective being located at depths greater than approximately 100m, steps i, ii, iii, and iv described above must be completed previously. Then, the deposition of the required layer of sepiolite is performed with the aid of a rigid tube of the minimum length necessary to prevent the dispersion of the material by the superficial current. This tube is supplied with containment material by means of an endless screw, band system or some other procedure that serves to displace large quantities of material.

In the case of containment of sediments with dispersed pollutants or sludge polluted in shallow waters (depths less than approximately 100m), the steps i, ii, and iii described above must be completed. Then the deposition of the containment material can be performed using a tube of the required length and a submerged diffuser or by deposition from the surface following conventional techniques of placing sub-aquatic coverings (capping). The length and diameter of the tube are determined by the quantity of containment material that must be deposited. The supply of containment material is performed as described for the previous case.

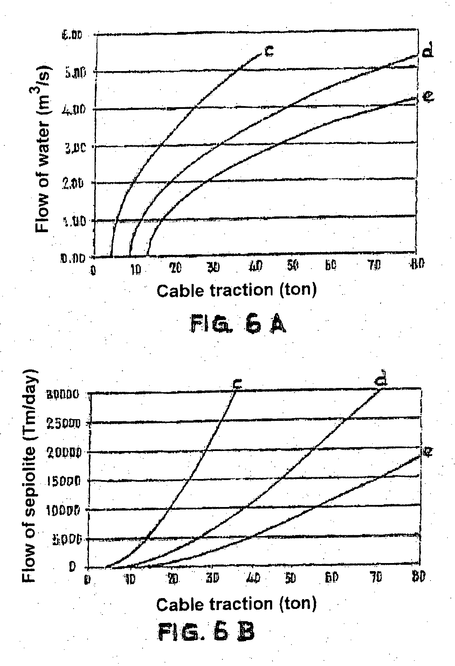

In order to construct a containment system over objectives where, in addition to sepiolite clay it is desired to use other granular materials as an integral part of the containment material, to reduce costs or prevent the disintegration and subsequent dispersion of the sepiolite by marine currents, stages i, ii, iii and iv described above must be completed. It is necessary to determine a minimum grain size of containment material to resist the critical force that occurs on the sea bed (see Table 1). In addition, it is necessary to use a rigid tube, to resist the dispersive effect of surface currents, to which is preferably linked a flexible perforated tube of a suitable material. The perforations must be of a size such that they are permeable to water but not to the granular materials that will form the containment material. This flexible tube is divided into sections, each supported by metal rings. The length of each section depends on the resistance of the tube material and the loads to which the tube will be subjected by the flow of containment material. One or several steel cables, anchored on the surface, hold the metal rings, supporting the total weight to which the tube is subjected. Figures 6-A and 6-B help to chose the tube and determine the rate of deposition of the containment material.

This economical and accessible containment system enables the creation of a "dynamic" covering that expels water, oxygen and carbon dioxide contained inside and isolates the hull of the wreck or the drum from oxidising agents. Additionally, it penetrates the structure of the hull or drum, in the case that a new crack appears or opens, and therefore prevents any type of pollutant from reaching the water column.

This invention, therefore, presents a containment material and an innocuous containment system, of high effectiveness and adaptable to many situations, of simple application, economical, safe in its effects in the short, medium and long term, ecological and environmentally acceptable.

## BRIEF DESCRIPTION OF THE FIGURES

Figure 1 shows the final disposition that the containment system is intended to achieve.

Figure 2 shows an experimental observation, performed in simulated sea water, of the absence of disintegration of the sepiolite particles in the process of sedimentation. The sedimentation is more diffused in saline water (curve a) than in the dry (curve b).

Figure 3 shows the progress of the deposition procedure of containment material using a monitoring system.

Figure 4A shows a simulation (scale in metres) of the trajectory of particles of containment material during a process of deposition in the north-east Atlantic for a depth of release of 100 m.

Figure 4B shows a simulation (scale in metres) of the trajectory of particles of the containment material during a process of deposition in the north-east Atlantic for a depth of release of 1,000 m.

Figure 4C shows a simulation (scale in metres) of the trajectory of particles of containment material during a process of deposition in the north-east Atlantic for a depth of release of 2,500 m.

Figure 4D shows a simulation (scale in metres) of the trajectory of particles of containment material during a process of deposition in the north-east Atlantic for a depth of release of 3,500 m.

Figure 5 shows the progress of the procedure of deposition of contaiment material using a system of tubes.

Figure 6A shows the flow of water for a tube of 1m diameter for c) 1,000m, d) 2,000m and e) 3,000m depth of the water column.

Figure 6B shows the flow of sepiolite for a tube of 1 m diameter for c) 1,000m, d) 2,000m and e) 3,000m depth of the water column.

## EMBODIMENTS OF THE INVENTION

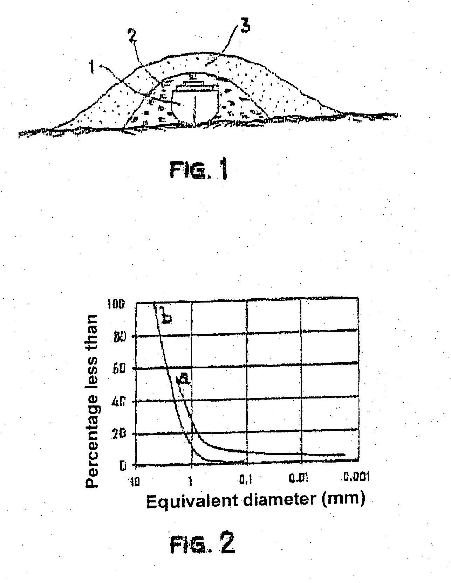

Figure 1 shows the final disposition that it is intended to achieve. The pollutant (1) is covered by a layer of sepiolite (2) over which an additional layer of granular material (3) is laid.

Below, several examples of implementation are described, not limiting the scope of the invention:

EXAMPLE 1

Example 1 refers to the use of the invention for the containment of the wreck of the oil tanker "Prestige" (objective to be covered) in order to prevent the release of petroleum that remains in its tanks (pollution source). The idea is based on mutating the effect of marine sediment in nature, which effectively protects the objects that it covers. The bow of the wreck, with dimensions of 121m length, 34m width and 18m total height is located in the Atlantic Ocean at coordinates 42°10'N, 12°04'W at a depth of 3,545m. The same idea can be used for wrecks located in shallower waters.

Application of the procedure to follow in order to construct the containment system:

i) Study of the marine currents in the zone of the sinking, velocities and directions:

0 - 100m: Shallow water, with variable current velocities depending on local winds.
Below 100m depth, the currents are seasonally stable.
100m - 600m: North Atlantic Central Water (NACW), velocity 10 cm.s$^{-1}$ to 20cm.s$^{-1}$ with variable N and S directions.
600m - 1,400m: Mediterranean Water (MW), typically 3cm.s$^{-1}$ in N direction with maximum velocities of 8cm.s$^{-1}$ at 1,150m depth. 1,400m - 2,500m: Labrador Sea Water (LSW), velocity 2 cm.s$^{-1}$ in N direction.
2,500m - ocean sea bed: North Atlantic Deep Water (NADW), velocity of 1 cm.s$^{-1}$ in NE direction.

ii) Selection of the minimum grain size of sepiolite (see Table 2). A clay with a minimum grain size of 5.5mm is chosen, as this will reach the required sedimentation velocity. This grain size will create stable sub-aquatic slopes of sepiolite of between 35° and 38° (experimental data).

iii) Determination of the required quantity of sepiolite. A typical covering value is between 1m and 3m. The consolidation curve obtained in our laboratories indicates that once the clay is deposited, the 2cm of containment material in contact with the hull of the wreck will consolidate in a period of time less than 6 years if the objective is covered with a layer of sepiolite of 2.5m thickness. The volume of containment sepiolite necessary is therefore 200,000 tons.

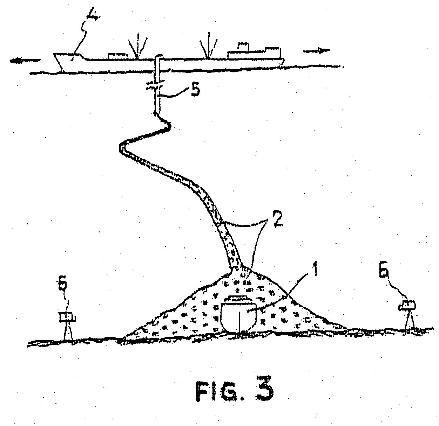

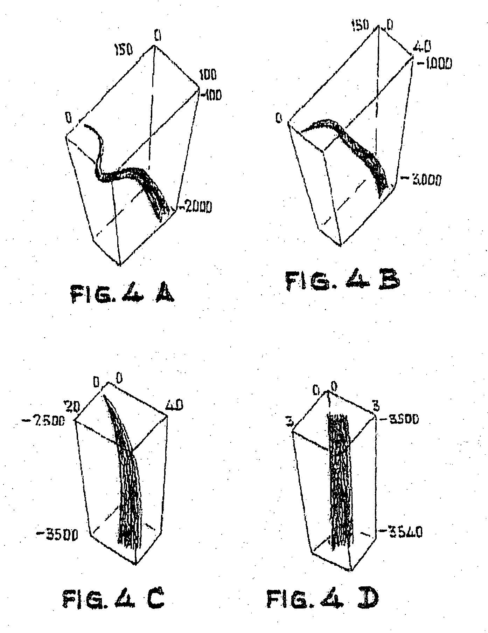

iv) Deposition of containment material. In Figure 3 the form of disposition of the required apparatus is shown. A ship (4) with various propellers capable of maintaining a fixed position on the ocean surface by means of, for example, GPS and a monitoring system (6) is used. The position of the pollutant (1) to be covered is ascertained by means of a high resolution depth sonar. The containment material, mainly consisting of sepiolite (2) is deposited from the ship (4) with the help of a rigid tube (5) of a minimum 100m length, with the aim of avoiding superficial currents and the strong turbulence of the layer of ocean mixing, which often reaches 100m depth. The tube is of internal diameter of 100cm and the material can be positioned at the appropriate depth with the help of sonar and the knowledge of seasonal currents. Figures 4-A, 4-B, 4-C and 4-D were obtained by means of a stochastic dispersion model incorporating the empirical law of Okubo (1971) for horizontal ocean diffusivity depending on the scale. The notably rectilinear trajectory of the particles in Figure 4-D agrees with the low turbulence at high depths at the scale of metres and less. This is a notable consequence of the strong stratification of deep ocean water, which makes possible in principle the deposition of material by means of a tube not in direct contact with the wreck but at a distance of the order of a kilometre.

The material, once deposited, consolidates over the hull and expels water and gases from it, preventing the corrosion of the surface. While the sepiolite is consolidating, there is a net outflow of gases and water from the hull.

This invention and the model for use for submerged ships provides an *in situ* solution at low cost and is based on the containment and isolation of the hull by a material that inhibits its corrosion and therefore the release of petroleum to the marine environment.

EXAMPLE 2

This example refers to the use of the invention in the isolation of pollution sources (wrecks, nuclear submarines or waste drums) located at great depth (deeper than 1,000m in this particular example) on the sea bed that require the construction of a containment system with containment material composed of sepiolite and other granular materials with the aim of reducing costs. Supposing the coordinates of the objective to be covered are 42°10'N, 12°04'W and the objective to be covered has the dimensions of 121 m length, 34m width and 18m total height:

i) Study of the marine currents in the area of sinking, velocity and directions: data presented in Example 1.

ii) Selection of minimum grain size of sepiolite (see Table 2). In this case, the grain size is selected by the slope that is necessary to be achieved in order to cover the objective.

iii) Determination of the quantity of sepiolite and the quantities of other granular materials required for the construction of the first layer of the containment system, assuming no losses of material.

Volume of sepiolite clay necessary: 30,000 tons.

Volume of sands and gravels necessary: 170,000 tons.

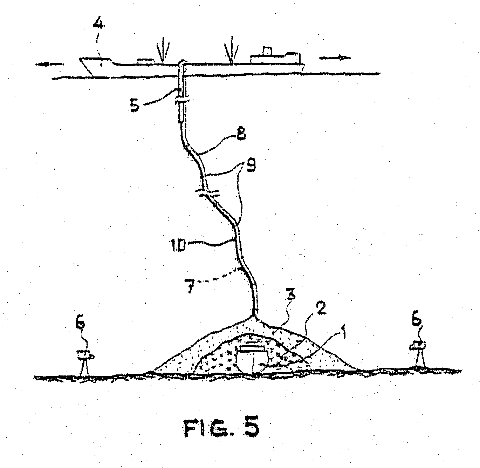

iv) Deposition of containment material. In Figure 5, the form of disposition of the required apparatus is shown. A ship (4) with various propellers capable of maintaining a fixed position on the ocean surface by means, for example, of GPS and the aid of a monitoring system. The position of the pollutant (1) to be covered is ascertained by means of a high resolution depth sonar. The containment material (7), consisting of sepiolite (2) and other granular material (3) is deposited from the ship (4) with the aid of a rigid tube (5) of at least 100m length, with the aim of avoiding superficial currents, which is linked to a flexible perforated tube (10) of the same diameter. In order to discharge the containment material (7) in a precise way, a tube that reaches the objective to be covered is used. This tube must be of appropriate material so that it is porous to water but not to the granular material. This tube is divided into sections, each supported by metal rings (9). The length of each section depends on the strength of the material of the tube and the loads to which the tube will be subjected by the flow of the containment material. A steel cable (8), anchored on the surface, holds the metal rings (9), supporting the total load to which the tube is subjected. In the case of the deposition of the first layer of sepiolite (2), the material is discharged into the rigid tube (5) on the surface, the clay drags the water inside the tube producing a current that is only limited by frictional forces against the interior wall of the tube. This current must be supplied on the surface by means of openings allowing the entrance of water. When the sepiolite (2) reaches the section of the flexible tube, the internal pressure in the tube is equal to the external pressure because the tube is porous. In stationary state, the weight in water of the sepiolite (2) within the tube is equivalent to a virtual pressure gradient that forces the water current. This pressure gradient is related to the flow of water according to the equation (2):

$$\Delta P = d.f.L.V^2/(2D) \qquad\qquad (2)$$

where $d$ is the density of water, $L$ is the length of the tube, $V$ is the velocity of the water, $D$ is the diameter of the tube and $f$ is a factor due to the friction against the internal wall of the tube. To determine $f$, Colebrook's formula is used for turbulent flow:

$$1/\sqrt{f} = -2.\log(\ (e/D)/3.7 + 2.5l/(Re.\sqrt{f}))$$

where e is the roughness of the wall and Re is Reynolds' number:

$$Re = d.V.D/\mu$$

where $\mu$ is the viscosity.

The traction on the supporting cable is the sum of its own weight and that of the drag force of the internal current. This force is equal to the weight in water of the sepiolite in the tube.

Supposing the diameter of the tube is 1m, its roughness is 1mm, the viscosity of marine water is 1.7cP, the supporting cable is steel of 32mm with a weight of 4.3kg.m$^{-1}$ and with a maximum stress of 70 tons. In Figure 6-A, the flow of the water current is shown and in Figure 6-B, the flow of sepiolite. In both cases, three depositions are considered, for objectives located at 1,000m, 2,000m and 3,000m depth. The volume of containment material that is required is an important factor in the determination of the time necessary for the construction of the containment barrier. It can be shown that with this cable, rates of deposition of 10,000 tons per day at 3,000m depth and 20,000 tons per day at 2,000m depth can be achieved.

This tube can be used to deposit the two layers of containment material required. In this case, in order to obtain the consolidation of the first layer of sepiolite, and the functioning of the containment system over the covered objective, a layer of 20cm to 30cm of this material will be sufficient. Afterwards, a layer of sand or gravel is deposited to reach a thickness of covering of 2m or 3m, so causing the consolidation of the first layer of sepiolite.

In this invention, the containment system presents a moderate cost linked to a strong inhibition of the corrosion of the hull or the drum and to its containment, preventing in this way the subsequent release of pollution. It is at least 10 times cheaper than the extraction of pollutants from submerged ships or drums from the sea bed where they are found.

EXAMPLE 3

This example refers to the use of the invention for the isolation of pollutants dispersed in sediments. This would be applicable for the containment of polluted sludge that have been produced by flooding of land-based stores of toxic waste generated by New Orleans industries following the effects of hurricane Katrina. The intention is to isolate polluted sediments from the overlying water column. The main function of the placement of the covering would be the physical stabilisation of the polluted sediment to prevent its re-suspension, impede bioaccumulation of pollution and the incorporation of pollutants into the food chain and to prevent the flow of pollutants dissolved in interstitial water of the polluted sediments to the overlying water column. In this case, the proposal is for the controlled deposition of sepiolite on the polluted sea bed located on the Gulf of Mexico continental shelf or on a lake bed, such as in Lake Pontchartrain, at depths of between 40m and 100m with a surface extension of covering over the polluted sediment (assuming $0.6km^2$ surface area).

The method of deposition used is similar to that shown in Example 1; however, in this case a submerged diffuser can be used, such as is described in the conventional techniques for the placement of coverings "capping" in Palermo et al. (1998). In addition, as sepiolite is a granular clay, it can be deposited from the surface, without negative impact for the health of the operatives.

i) Study of the marine or lake currents in the area of the polluted sediments and sludge, velocities and directions: the maximum currents measured in the area are of $60cm.s^{-1}$ with variable directions of N to S.

ii) Selection of the minimum grain size of sepiolite. In this case, the limiting factor for determining the grain size of sepiolite required is the force of the water currents in the location (see Table 1), considering that the polluted sediment presents low roughness. As $\tau = \rho.v^{*2}$, where p is the density of marine water, for $v = 60cm.s^{-1}$, we have: $v^* = 1.8cm.s^{-1}$ on a slightly rough bed, and $\tau = 0.324N.m^{-2}$. The particles must have a minimum diameter of 1 mm to resist this force without re-suspension or being affected by erosion processes (see Table 1).

iii) Determination of the quantity of sepiolite required for the construction of the first layer of the containment system, assuming no loss of material. The minimum thickness of the sepiolite layer in contact with the polluted sludge is between 2cm and 4cm. Assuming an average thickness of sepiolite of 25cm, the volume of sepiolite clay required is 240,000 tons. In the case of it being necessary to use other materials in order to avoid bioturbation caused by marine or lake organisms, an additional 24cm thickness of granular materials (other clays, sediments, sands, gravel, etc.) could be added.

iv) Deposition of the containment material. Placement of one or several ships on the surface fitted with Global Positioning Systems GPS and loaded with sepiolite. The position of the objective to be covered can be ascertained with a high resolution sonar or other procedures with the necessary precision. The deposition can be performed using a tube of the required length and a submerged diffuser or even deposited from the surface following existing conventional techniques for placing sub-aquatic coverings (capping). The length and diameter of the tube are determined by the quantity of containment material that must be deposited. Delivery of the containment material is performed as described in Example 1.

**REFERENCES**

Andrade L, Covelo EF, Vega FA. (2005). Uso de Arcillas Especiales para Depuración de Aguas Residuales. Información tecnológica, vol.(1), pp. 3-10.
Cedre (Centre de Documentation, de Recherche et d'Experimentations sur les Pollutions Accidentelles des Eaux). (2002). Les leçons techniques de l'Erika et autres accidents. Actes du collogue, Brest. Cedre. www.le-cedre.fr
Dultz S, Riebe B, Bunnenberg C. (2005). Temperature effects on iodine adsoption on organo-clay minerals II.

Structural effects. Applied Clay Science 28 pp. 17-30.

ENRESA (1995). Almacenamiento geológico profundo de residuos radioactivos de alta actividad (AGP). Diseños conceptuales genéricos: Publicatión Técnica ENRESA 11/95. 105 pp. Madrid.

Guo J. (1997). "Albert Shields Story". Discussion. J.Hydr. Engrg., ASCE, 123 (7), 666.

IAEA. (1999). Inventory of radioactive waste disposals at sea. IAEA-TECDOC 1105. Vienna.

Kara M, Yuzer H, Sabah E, Celik MS. (2003). Adsorption of cobalt from aqueous solutions onto sepiolite. Water Research 37 pp. 224-232. Kennedy JF. (1995). "Albert Shields Story". J. Hydr. Engrg., ASCE, 121 (11), 766-772.

Lázaro MJ, Moliner R, Domeño C, Nerin C. (2000). Low-cost sorbents for demetalisation of waste oils via pyrolysis. Journal of Analytical and Applied Pyrolysis 57 pp. 119-131.

Li ZH, Willms CA, Kniola, K. (2003). Removal of anionic pollutants using surfactant-modified palygorskite and sepiolite. Clays and Clay Minerals 51 pp. 445-451.

Marcos MJ, Agüero A, García-Olivares A, Haupt BJ, de Pablos JL. (2004). Assessment of the behaviour of oils in the tanks of the "Prestige" in the Atlantic deep Sea. Scientia Marina 68 (3) pp. 307-315.

Monfils R. (2005). The global risk of marine pollution from WWII shipwrecks: examples from the seven seas. Proceedings of the International Oil Spill Conference (IOSC), May 15-19 2005. Miami Beach, Florida, USA. Organizers: API, IMO, IPIECA, MMS, NOAA, USCG, USEPA.

Okubo A. (1971). Oceanic diffusion diagrams. Deep-Sea Research Oceanogr Abst 18 (8) pp. 789-802.

Oughton DH, Skipperuda L, Fifield LK, Cresswell RG, Salbu B, Day P. (2004). Accelerator mass spectrometry measurement of 240Pu/239Pu isotope ratios in Novaya Zemlya and Kara Sea sediments. Applied Radiation and Isotopes 61 pp. 249-253.

Palermo MR, Clausner JE, Rollings MP, Williams GL, Myers TE, Fredette TJ. (1998). Guidance for Subaqueous Dredged Material Capping. Technical Report DOER-1, 302 p. June 1998.

Povinec PP, Oregioni B, Jull AJT, Kierser WE, Zhao X-L. (2000). AMS measurements of 14C and 129I in seawater around radioactive waste dump sites. Nuclear Instruments and Methods in Physics Research B 172 pp. 672-678.

Sivintsev YV, Chernjaev AM. (1998). For how long will sea water stay out of contact with radionuclides in dumped nuclear reactors? Radiation Protection Dosimetry 75, Nos 1-4, pp. 199-202.

## Claims

1. Method for the containment of pollutants present in the aquatic environment by means of the deposition of a confining material (7), **characterised in that** it comprises the following stages:

    i) Measurement *in situ* or documentation of the surface and deep currents and consideration of sporadic events, such as storms, that might occur in the area of the location of the pollutant (1) to be covered.
    ii) Selection of the minimum grain size of the containment material (7).
    iii) Determination of the quantity of the containment material (7).
    iv) Deposition over the pollution source of the containment material (7), composed of at least one continuous layer of sepiolite clay (2), with a sepiolite mineral content of between 25 and 100%.

2. Method for the containment of pollutants present in the aquatic environment according to claim 1, **characterised in that** additionally at least one layer of granular material (3) is deposited, making up to 99% by weight of the total confining material (7).

3. Method for the containment of pollutants present in the aquatic environment according to claim 2, **characterised in that** the granular material (3) is sand, gravel, sediments, soils, other clays or mixtures of various granular materials.

4. Method for the containment of pollutants present in the aquatic environment according to claim 1, **characterised in that** the deposition over the pollution source of the containment material (7), is performed through a rigid tube (5) of diameter between 0.1m and 10m and total length of up to 150m driven by a feed mechanism.

5. Method for the containment of pollutants present in the aquatic environment according to claim 4, **characterised in that** the rigid tube (5) has perforations of such a diameter that they allow the passage of water but not of containment material (7).

6. Method for the containment of pollutants present in the aquatic environment according to claim 4, **characterised in that** linked to the end of the rigid tube (5) there is a flexible tube (10) of diameter between 0.1m and 10m.

7. Method for the containment of pollutants present in the aquatic environment according to claim 6, **characterised in that** the flexible tube (10) has perforations of such a diameter that they allow the passage of water but not of the containment material (7).

8. Method for the containment of pollutants present in the aquatic environment according to claim 4, **characterised in that** the feed mechanism is an endless screw.

9. Method for the containment of pollutants present in the aquatic environment according to claim 4, **characterised in that** the feed mechanism is a band.

**Patentansprüche**

1. Verfahren zur Begrenzung von Schadstoffe in der aquatischen Umwelt durch Ablagerung eines Begrenzungmaterials (7), **dadurch gekennzeichnet, dass** die folgenden Stufen umfaßt:

   i) In situ-Messung, oder Dokumentation, der oberflächlichen und tiefen Ströme und Betrachtung von sporadischen Veranstaltungen wie Stürme, die im Bereich der Lage den Schadstoff (1) zur Deckung auftreten können.
   ii) Mindeskorngrößenauswahl des Begrenzungmaterials (7).
   iii) Bestimmung der Menge des Begrenzungmaterials (7).
   iv) Ablagerung auf die Schadstoffquelle des Begrenzungmaterials (7), zusammengesetzt mindestens aus einer kontinuierlicher Schicht aus Sepiolit-Ton (2), mit einem Sepiolitmineralgehalt zwischen 25 und 100%.

2. Verfahren zur Begrenzung von Schadstoffe in der aquatischen Umwelt nach Anspruch 1, **dadurch gekennzeichnet, dass**, außerdem, mindestens eine Schicht aus körnigen Material (3), die bis 99 % vom Gesamtgewichtprozent des Begrenzungmaterials (7) bildet, abgelagert ist.

3. Verfahren zur Begrenzung von Schadstoffe in der aquatischen Umwelt nach Anspruch 2, **dadurch gekennzeichnet, dass** das körnige Material (3) Sand, Kies, Sedimente, Boden, andere Tone oder Mischungen aus verschiedenen körnigen Materialien ist.

4. Verfahren zur Begrenzung von Schadstoffe in der aquatischen Umwelt nach Anspruch 1, **dadurch gekennzeichnet, dass** die Ablagerung des Begrenzungmaterials (7) auf die Schadstoffquelle durch eines starres Rohr (5) mit einem Durchmesser zwischen 0,1 und 10 m und Gesamtlänge bis 150 m durch einem Vorschubantrieb angetrieben wird, ausgeführt ist.

5. Verfahren zur Begrenzung von Schadstoffe in der aquatischen Umwelt nach Anspruch 4, **dadurch gekennzeichnet, dass** das starre Rohr (5) Bohrungen mit einem Durchmesser, so daß das Wasser aber nicht das Begrenzungmaterial (7) durchgehen kann, hast.

6. Verfahren zur Begrenzung von Schadstoffe in der aquatischen Umwelt nach Anspruch 4, **dadurch gekennzeichnet, dass** am unteren Ende des starres Rohres (5) ein flexibles Rohr (10) mit einem Durchmesser zwischen 0,1 m und 10 m, verbunden ist.

7. Verfahren zur Begrenzung von Schadstoffe in der aquatischen Umwelt nach Anspruch 6, **dadurch gekennzeichnet, dass** das flexibles Rohr (10) Bohrungen mit einem Durchmesser, so daß das Wasser aber nicht das Begrenzungmaterial (7) durchgehen kann, hast.

8. Verfahren zur Begrenzung von Schadstoffe in der aquatischen Umwelt nach Anspruch 4, **dadurch gekennzeichnet, dass** der Vorschubantrieb eine Schnecke ist.

9. Verfahren zur Begrenzung von Schadstoffe in der aquatischen Umwelt nach Anspruch 4, **dadurch gekennzeichnet, dass** der Vorschubantrieb ein Band ist.

**Revendications**

1. Procédé de confinement des polluants présents dans le milieu aquatique par le dépôt d'un matériel de confinement (7), **caractérisé en ce qu'**il comprend les étapes suivantes:

i) Mesure *in situ,* ou documentation, des courants superficiels et profonds et considération des événements sporadiques comme les tempêtes, qui pourraient se produire dans la zone de localisation du polluant (1) à couvrir.
ii) Sélection de la taille minimale de grain du matériel de confinement (7).
iii) Détermination de la quantité du matériel de confinement (7).
iv) Dépôt sur la source de pollution du matériel de confinement (7), constitué d'au moins une couche continue d'argile sépiolite (2), avec une teneur en minéral de sépiolite comprise entre 25 et 100%.

2. Procédé de confinement des polluants présents dans le milieu aquatique selon la revendication 1, **caractérisé en ce que**, en plus, on dépose au moins une couche d'un matériau granulaire (3), qui représente jusque 99 % en poids de la totalité du matériel de confinement (7).

3. Procédé de confinement des polluants présents dans le milieu aquatique selon la revendication 2, **caractérisé en ce que** le matériau granulaire (3) est sable, gravier, sédiments, sols, autres argiles ou mélanges de divers matériaux granulaires.

4. Procédé de confinement des polluants présents dans le milieu aquatique selon la revendication 1, **caractérisé en ce que** le dépôt du matériel de confinement (7) sur la source de pollution est réalisé à travers d'un tuyau rigide (5) avec un diamètre compris entre 0,1 et 10 m et une longueur totale jusque 150 m entrainé par un mécanisme d'alimentation.

5. Procédé de confinement des polluants présents dans le milieu aquatique selon la revendication 4, **caractérisé en ce que** le tuyau rigide (5) a des trous avec un diamètre pour permettre à l'eau mais pas au matériel de confinement (7) de passer.

6. Procédé de confinement des polluants présents dans le milieu aquatique selon la revendication 4, **caractérisé en ce que** relié à l'extrémité inferieure du tuyau rigide (5) il y a un tuyau flexible (10) avec un diamètre compris entre 0,1 m et 10 m.

7. Procédé de confinement des polluants présents dans le milieu aquatique selon la revendication 6, **caractérisé en ce que** le tuyau flexible (10) a des trous avec un diamètre pour permettre à l'eau mais pas au matériel de confinement (7) de passer.

8. Procédé de confinement des polluants présents dans le milieu aquatique selon la revendication 4, **caractérisé en ce que** le mécanisme d'alimentation est un vis sans fin.

9. Procédé de confinement des polluants présents dans le milieu aquatique selon la revendication 4, **caractérisé en ce que** le mécanisme d'alimentation est une bande.

FIG. 1

FIG. 2

FIG. 3

FIG. 4 A

FIG. 4 B

FIG. 4 C

FIG. 4 D

FIG. 5

FIG. 6 A

FIG. 6 B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0717928 A
- ES 8603358
- ES 2005754
- WO 9519326 A
- JP 2004092244 B

- US 5115751 A
- US 6290637 B
- US 5502268 A
- US 4129008 A
- US 4266889 A

### Non-patent literature cited in the description

- **ANDRADE L ; COVELO EF ; VEGA FA.** Uso de Arcillas Especiales para Depuración de Aguas Residuales. *Información tecnológica,* 2005, vol. 1, 3-10
- **DULTZ S ; RIEBE B ; BUNNENBERG C.** Temperature effects on iodine adsoption on organo-clay minerals II. Structural effects. *Applied Clay Science,* 2005, vol. 28, 17-30
- **ENRESA.** Almacenamiento geológico profundo de residuos radioactivos de alta actividad (AGP). *Diseños conceptuales genéricos: Publicatión Técnica ENRESA,* 1995, vol. 11/95, 105
- Albert Shields Story. **GUO J.** Discussion. J.Hydr. Engrg. ASCE, 1997, vol. 123, 666
- **IAEA.** Inventory of radioactive waste disposals at sea. *IAEA-TECDOC,* 1999, 1105
- **KARA M ; YUZER H ; SABAH E ; CELIK MS.** *Adsorption of cobalt from aqueous solutions onto sepiolite. Water Research,* 2003, vol. 37, 224-232
- Albert Shields Story. **KENNEDY JF.** J. Hydr. Engrg. ASCE, 1995, vol. 121, 766-772
- **LÁZARO MJ ; MOLINER R ; DOMEÑO C ; NERIN C.** Low-cost sorbents for demetalisation of waste oils via pyrolysis. *Journal of Analytical and Applied Pyrolysis,* 2000, vol. 57, 119-131
- **LI ZH ; WILLMS CA ; KNIOLA, K.** Removal of anionic pollutants using surfactant-modified palygorskite and sepiolite. *Clays and Clay Minerals,* 2003, vol. 51, 445-451

- Assessment of the behaviour of oils in the tanks of the "Prestige. **MARCOS MJ ; AGÜERO A ; GARCÍA-OLIVARES A ; HAUPT BJ ; DE PABLOS JL.** Atlantic deep Sea. Scientia Marina, 2004, vol. 68, 307-315
- **MONFILS R.** The global risk of marine pollution from WWII shipwrecks: examples from the seven seas. *Proceedings of the International Oil Spill Conference (IOSC),* 2005
- **OKUBO A.** Oceanic diffusion diagrams. *Deep-Sea Research Oceanogr Abst,* 1971, vol. 18 (8), 789-802
- **OUGHTON DH ; SKIPPERUDA L ; FIFIELD LK ; CRESSWELL RG ; SALBU B ; DAY P.** Accelerator mass spectrometry measurement of Pu/239Pu isotope ratios in Novaya Zemlya and Kara Sea sediments. *Applied Radiation and Isotopes,* 2004, vol. 61, 249-253
- **PALERMO MR ; CLAUSNER JE ; ROLLINGS MP ; WILLIAMS GL ; MYERS TE ; FREDETTE TJ.** Guidance for Subaqueous Dredged Material Capping. *Technical Report DOER-1,* June 1998, 302
- **POVINEC PP ; OREGIONI B ; JULL AJT ; KIERSER WE ; ZHAO X-L.** AMS measurements of C and I in seawater around radioactive waste dump sites. *Nuclear Instruments and Methods in Physics Research B,* 2000, vol. 172, 672-678
- **SIVINTSEV YV ; CHERNJAEV AM.** For how long will sea water stay out of contact with radionuclides in dumped nuclear reactors?. *Radiation Protection Dosimetry,* 1998, vol. 75 (1-4), 199-202